# EUROPEAN PATENT SPECIFICATION

(11) **EP 1 382 581 B1**
(45) Date of publication and mention of the grant of the patent: **04.01.2017**
(21) Application number: 03015672.3
(22) Date of filing: 18.07.2003
(51) Int. Cl.: C03B 37/027

(54) **Cooling apparatus for high-speed drawing of optical fiber**
Kühlvorrichtung für das Ziehen optischer Fasern mit hoher Geschwindigkeit
Dispositif de refroidissment pour l'étirage rapide des fibres optiques

(30) Priority: 18.07.2002 KR 2002041926
(43) Date of publication of application: 21.01.2004
(73) Proprietor: Corning Korea Optical Communications Co., Gumi-si Gyeongsangbuk-do (KR)
(72) Inventor: Lee, Yeong-Seop, Samsung Elect. Co.,Ltd., Suwon-city, Kyungki-do (KR); Jung, Ki-Tae, Samsung Elect. Co.,Ltd., Suwon-city, Kyungki-do (KR); Lee, Hyun-Ju, Samsung Elect. Co.,Ltd., Suwon-city, Kyungki-do (KR); Park, Tae-Sang, Samsung Elect. Co.,Ltd., Suwon-city, Kyungki-do (KR)
(74) Representative: Nederlandsch Octrooibureau

(56) References cited:
- EP-A- 1 180 500
- DE-A- 3 919 953
- DE-A- 4 215 475
- GB-A- 2 226 310
- US-A- 4 913 715
- US-A- 4 966 615
- US-A- 5 568 728
- PATENT ABSTRACTS OF JAPAN vol. 009, no. 196 (C-297), 13 August 1985 (1985-08-13) -& JP 60 065747 A (FURUKAWA DENKI KOGYO KK;OTHERS: 01), 15 April 1985 (1985-04-15)
- PATENT ABSTRACTS OF JAPAN vol. 018, no. 588 (C-1271), 10 November 1994 (1994-11-10) -& JP 06 219789 A (FURUKAWA ELECTRIC CO LTD:THE), 9 August 1994 (1994-08-09)

## Description

### BACKGROUND OF THE INVENTION

### 1. Field of the Invention

The present invention relates to an optical-fiber drawing apparatus for extracting a single strand of optical fiber from an optical-fiber preform and, more particularly, to a cooling apparatus used for the high-speed drawing of an optical fiber.

### 2. Description of the Related Art

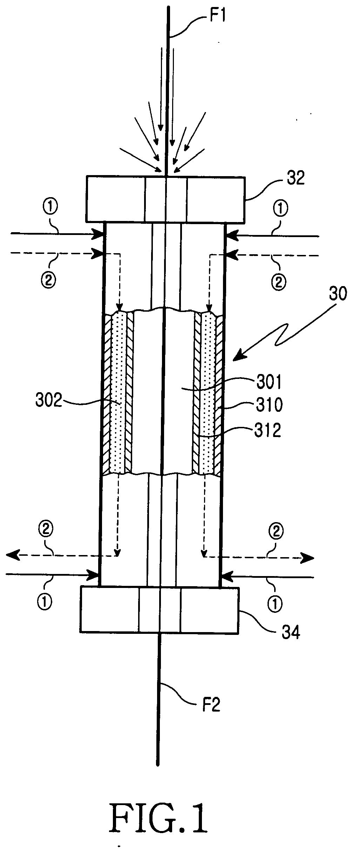

The process for manufacturing an optical fiber is typically divided into the steps of preparing an optical-fiber preform and drawing an optical fiber to extract a strand of optical fiber from the prepared preform. A lot of research efforts have been focused on preparing a large-diameter optical-fiber perform, specifically in the preparation of an optical-fiber preform, which is used to extract a larger number of optical-fiber strands. For example, an over-jacket tube method, a rod-in tube method, and the like have been employed in manufacturing a large-diameter optical-fiber preform. FIG. 1 shows a conventional cooling apparatus employed in the process of drawing an optical fiber. As shown in FIG. 1, an optical fiber F1, which is drawn at a high temperature and a high speed, is cooled while passing through a cooling apparatus. Then, an optical fiber F2 having an appropriate temperature for coating is obtained. The cooling apparatus consists of a cooling body 30, and upper and lower irises 32 and 34, which are mounted on the upper and lower ends of the cooling body 30, respectively. Each of the irises 32 and 34 inhibits the ingress of external air and any minute movements of the optical fiber at the time of initial drawing.

The cooling body 30 has a double-walled structure of copper tubes and comprises a first copper pipe 310 and a second copper pipe 312, wherein the latter is coaxially located within the former. From each of the upper and lower ends of the cooling body 30, helium gas is supplied into the inner space 301 of the second copper pipe 320 in the directions indicated by the arrows 1, thus forming a helium-gas atmosphere in the inner space 301. As such, the drawn optical fiber passes through the inner space 301. Furthermore, a space for circulating the cooling water 302 of a low temperature is provided between the first copper pipe 310 and the second copper pipe 312 to cool the helium gas contained in the internal space 301 of the second copper pipe, so that the cooling water performs heat exchange with the drawn optical fiber F1 in a high temperature state. Through the heat exchange, the optical fiber F1 which is drawn at a high temperature is cooled to an appropriate temperature. In order to draw more optical fibers from a given optical-fiber preform, it is necessary to increase the efficiency of the process so that the optical fiber can be drawn at a speed higher than that of the prior art.

However, if an optical fiber is drawn from the preform at a high speed, external air may penetrate the internal space 301 of the second copper pipe through the upper iris 32. In other words, as the optical fiber is drawn at a high speed, airflow is generated in the region adjacent to the circumferential surface of the optical fiber, and due to the airflow external air penetrates the internal space 301 of the second copper pipe, within which the helium atmosphere has been formed, thus reducing the density of helium within the internal space of the second copper pipe.

JP 2164739 (A) discloses how to improve the cooling efficiency of optical fiber by providing rotating blades around the optical fiber heated and drawn, and moving the air cooled enough in the vicinity of the inner peripheral wall of casing to the optical fiber side in the center of casing by the revolution of the blades.

In particular, the helium density is reduced more in the region adjacent to the upper iris 32 within the cooling body 30. Such a reduction of helium density is the most important cause of a drop in the cooling efficiency, and the operator must supply more helium gas than needed to the cooling apparatus in order to compensate the reduction of helium density. As a result, it is necessary for a manufacturer to supply more helium gas than needed to prevent a drop in efficiency which results from the reduction of helium density and causes an increase in costs.

Document US 4,966,615 describes a method of and an apparatus for cooling an optical fibre drawn from a heated glass blank by passing the fibre through a cooling pipe in which a cooling gas flows in the axial direction of the fibre around it. In order to reduce the consumption of cooling gas, the cooling gas is caused to flow turbulently around the fibre by a throttle point formed by a partition wall in the cooling pipe.

Document US 4,913,715 deals with a method of and a device for manufacturing an optical fibre with a protective coating. A cooling device cools the fibre after drawing from a preform. The cooling device comprises a forced-cooled double-walled tube.

Document EP 1180500 A2 shows a method and apparatus for cooling an optical fibre during drawing using a multi-chamber cooler.

Document JP 60065747 shows a cylinder used for quenching an optical fibre obtained by thermal elongation. The quenching is achieved by a gyrating flow of a cooling medium within the cylinder. The flow is inter alia accelerated via rotating blades at the lower part of the cylinder.

Document JP 6219789 shows an apparatus for cooling an optical fibre equipped with spray-producing nozzles and circulating fans.

Document GB 2226310 A describes a method wherein an optical fibre which has been freshly drawn is cooled by passing it down a long narrow cooling tube and introducing helium gas at the top of the tube, the diameter of the tube being small so that the fibre draws the buoyant cooling gas from the top to the bottom of the tube.

Document DE 42 15 475 A1 describes a method in which an optical fibre is drawn from a solid perform. The drawn fibre is cooled from the drawing temperature by a gas stream in a direction opposite the drawing direction, the cooling gas velocity being controlled by an additional gas cushion which preferably opposes the motion of the cooling gas.

Document US 5,568,728 describes a filament cooler suitable for cooling freshly drawn optical fibre preparatory for being coated with a protective plastics coating. The filament cooler has a water-cooled body member provided with a through hole opening out abruptly into a succession of spherical chambers in which a cyclonic gas flow is induced by the tangential injection of helium.

Document DE 39 19 953 A1 describes an apparatus for cooling a drawn lightconducting fibre comprising a hollow body which can be opened up by rotating two halves about a hinge.

### SUMMARY OF THE INVENTION

Accordingly, the present invention has been made to solve the above-mentioned problems occurring in the prior art by providing a cooling apparatus that can enhance cooling efficiency to allow high-speed drawing.

According to one aspect, the present invention provides a cooling apparatus that can reduce the amount of cooling gas needed.

According to another aspect, the present invention provides a cooling apparatus, which can increase turbulence in the molecular movements of cooling gas, thereby minimizing the consumed amount of cooling gas.

The inventive problems are solved by a cooling apparatus as recited in claim 1. Preferred embodiments are detailed in the dependent claims.

### BRIEF DESCRIPTION OF THE DRAWINGS

The above and other features and advantages of the present invention will be more apparent from the following detailed description taken in conjunction with the accompanying drawings, in which:
- FIG. 1: is a frontal view showing a partial body view of a cooling apparatus employed in a conventional drawing tower;
- FIG. 2: is a constructional view of an optical-fiber drawing apparatus, which employs a cooling apparatus in accordance with a preferred embodiment of the present invention;
- FIG. 3: is a side view showing the external appearance of a cooling apparatus used in high-speed drawing in accordance with a preferred embodiment of the present invention;
- FIG. 4: is a side view showing a layout of turbulence generators in accordance with a preferred embodiment of the present invention;
- FIG. 5: is a cross-sectional view taken along the line X-X;
- FIG. 6: is a cross-sectional view taken along the line Y-Y; and,
- FIG. 7: is a cross-sectional view showing the cooling apparatus shown in FIG. 4 in the disassembled state.

### DETAILED DESCRIPTION OF THE PREFERRED EMBODIMENTS

Hereinafter, preferred embodiments of the present invention will be described in detail with reference to the accompanying drawings. For the purposes of clarity and simplicity, a detailed description of known functions and configurations incorporated herein will be omitted as it may make the subject matter of the present invention unclear.

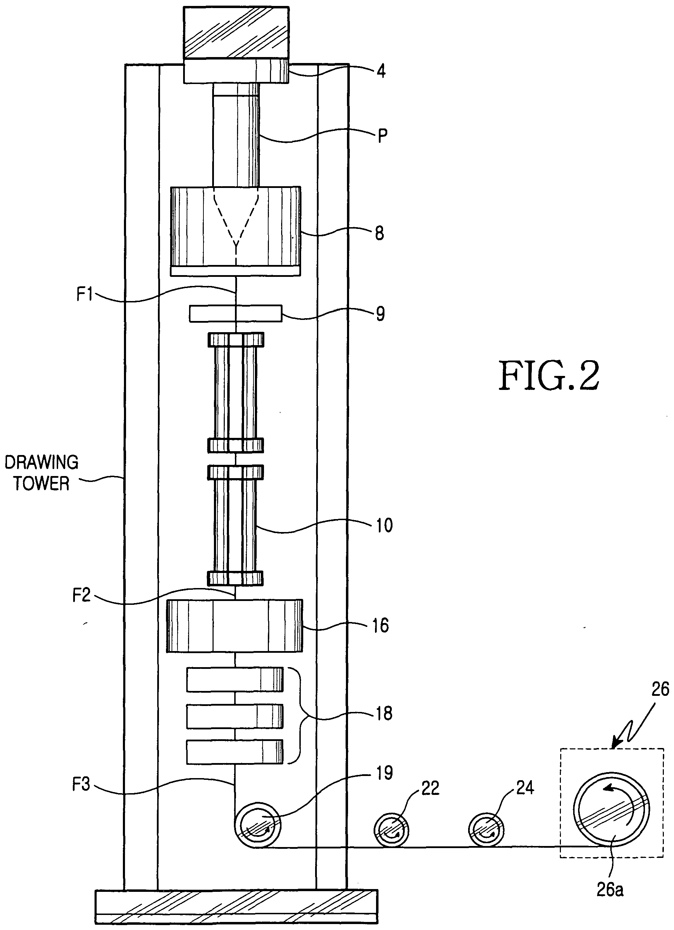

FIG. 2 is a schematic diagram showing optical-fiber drawing components mounted within a drawing tower. In particular, FIG. 2 shows two cooling apparatuses 10 for high-speed drawing employed in the optical-fiber drawing facilities according to the embodiment of the present invention. However, it should be noted that more than two cooling apparatuses may be implemented according to the teachings of the present invention. Thus, the number of cooling apparatuses in FIG. 2 should not limit the scope of the invention.

As shown in FIG. 2, the process for drawing an optical fiber is performed sequentially in the drawing tower (the height of which is at least 10 m) in the downward vertical direction. Initially, an optical-fiber preform P is provided and centered on the vertical axis of the drawing tower and melted within a melting furnace 8 to a sufficiently high temperature, then drawn to a single-strand optical fiber F1. A top chuck 4 holds the optical fiber preform P. The diameter of the drawn optical fiber F1 is controlled by a diameter controller 9 and passes through the cooling apparatus 10 of the present invention, so that the fiber can be cooled to an appropriate temperature for coating the cladding thereon. The cooled optical fiber F2 is coated with a cladding while passing through a coating device 16 and then ultraviolet (UV) curable polymer, which has been coated on the circumferential surface of the optical fiber, is cured while the optical fiber passes through a UV curing device 18.

Following this process, the optical fiber which has passed through the curing phase passes through a capstan 19 and a plurality of guide rollers 22 and 24 and then eventually wound on a winding unit 26. The capstan 19 provides a predetermined drawing force so that an optical fiber with a constant diameter can be drawn from the optical-fiber preform. Reference numeral 26a indicates a reel or a spool to which the optical fiber is finally wound.

Each of the optical-fiber drawing facilities mounted within the optical-fiber drawing tower is maintained with a vertical or horizontal relationship with each other and has a construction impervious to vibration or impact. In particular, the cooling apparatus 10 serves to evenly cool the drawn optical fiber F1. The vertical height of the drawing tower shown in the drawings exceeds about 10 m, and the optical fiber drawn from one optical-fiber preform P will have a vertical span exceeding about 10 m. The cooling apparatus 10 performs the function of cooling the optical fiber F1 to about 40 °C as the optical fiber F1 is drawn at a high temperature and high speed.

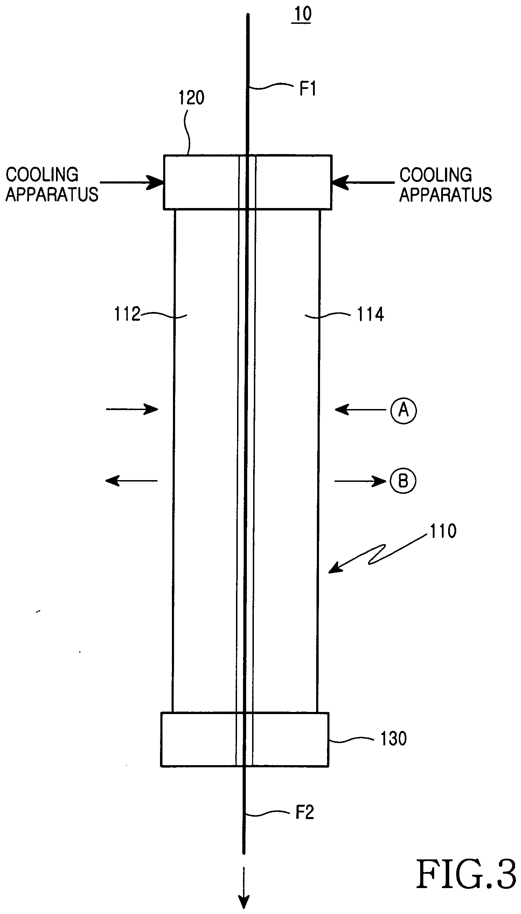

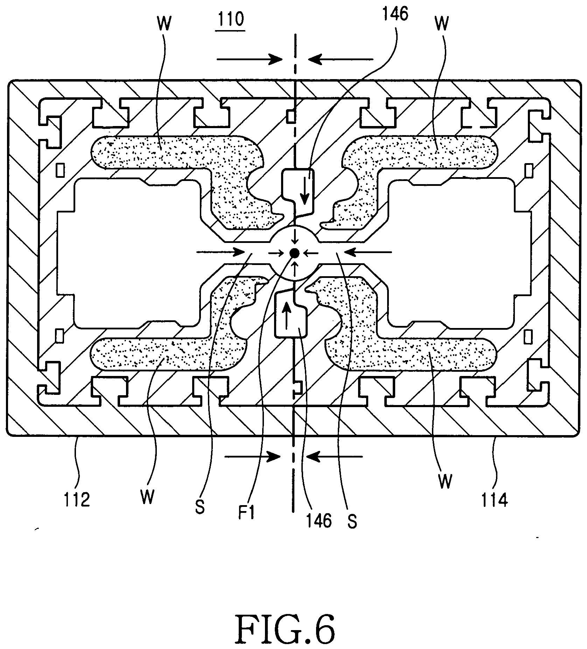

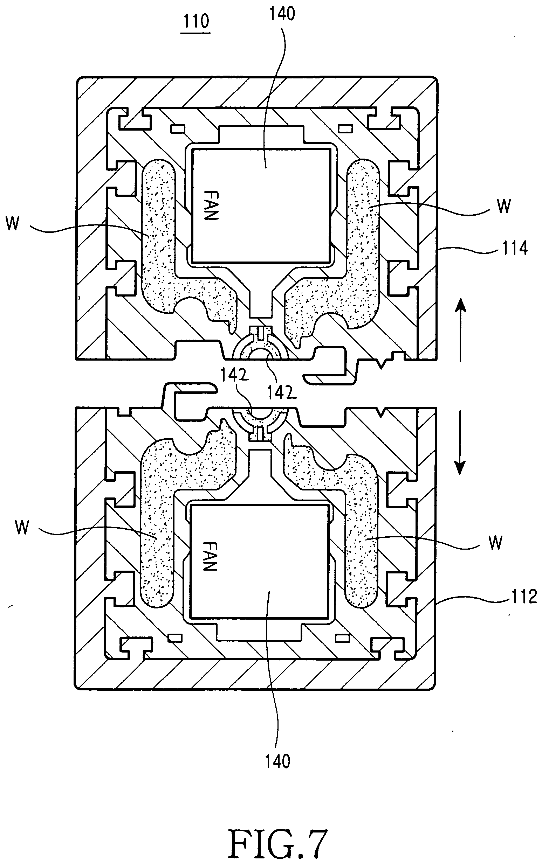

Now, a detailed construction of the cooling apparatus in accordance with the present invention will be described with reference to FIGs. 3 to 7.

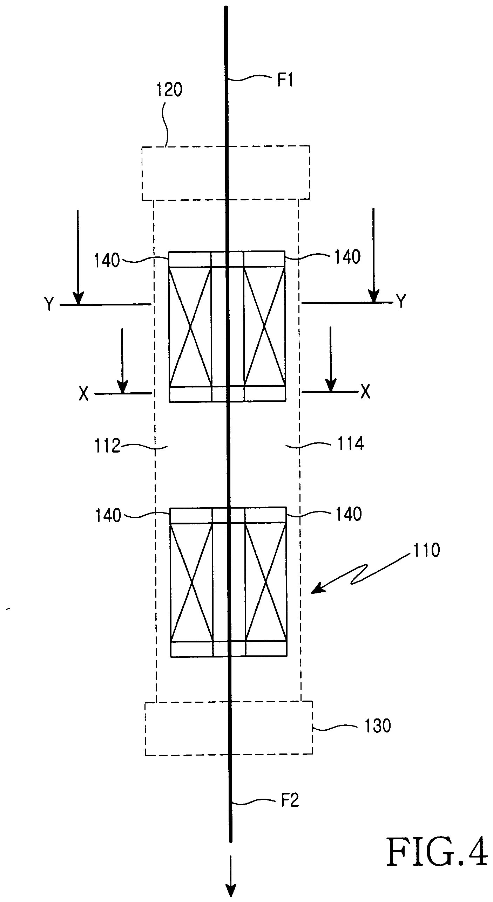

As shown in FIGs. 3 and 4, the cooling apparatus 10 is used in high-speed drawing (hereinafter referred to as "cooling apparatus") of an optical fiber to cool an optical fiber to a desired temperature appropriate for coating the drawn optical fiber. It should be noted that at least one cooling apparatus can be mounted in the drawing tower. The cooling apparatus 10 is constructed so that it can be automatically opened, closed, and controlled. A means for automatically opening, closing, and controlling the cooling apparatus is not shown nor discussed as they represent subject matter not covered by the present invention. The cooling apparatuses 10 are installed with a turbulence generator 140 within a cooling body 110, thereby minimizing the amount of cooling gas utilized as a refrigerant (He, Ar, N₂).

FIG. 3 is a side view showing an external appearance of the cooling apparatus according to the present invention. In the drawing, an optical fiber which would be concealed by the cooling body is illustrated. FIG. 4 shows a state in which four turbulence generators are employed and mounted within the cooling apparatus in accordance with the present invention.

Referring to FIG. 3, the cooling apparatus 10 comprises a left-right separable cooling body, which is composed of a left cooling body part 112 and a right cooling body part 114; upper and lower sealing caps 120 and 130 that are provided on the upper and lower ends of the cooling body 110, respectively, to block the ingress of external air, wherein cooling gas is supplied into the cooling body through the sealing caps; at least one turbulence generator 140 positioned at a predetermined position in the longitudinal direction of the cooling body 110 to further activate the molecular movements of the cooling gas introduced into the cooling body 110.

The cooling body 110 is extended to a predetermined length in the longitudinal direction of the optical fiber F1 and allows the optical fiber, which is drawn along the longitudinal center line within the cooling body, to be cooled to an appropriate temperature. The upper and lower sealing caps 120 and 130 are provided to prohibit the ingress of external air produced during high-speed drawing, in particular by providing a counter-flow. Note that the left cooling body part 112 and right cooling body part 114 are integrally assembled by adjoining them in the direction indicated by arrows A and disassembled by separating them in the direction indicated by arrows B.

The turbulence generator 140 serves to cause the molecular flow of the cooling gas (i.e., helium gas), which is supplied to the interior of the integrally assembled cooling body 110, to be turbulenced, thereby maximizing the cooling efficiency. Each of the left side cooling part 112 and right side cooling part 114 is provided with one turbulence generator 140, and at least one turbulence generator is provided in the longitudinal direction of the cooling body 110. Note that the turbulence generators are mounted in the left side cooling part 112 and right side cooling part 114 in a symmetrical fashion. As the turbulence generators 140 communicate with the atmosphere surrounding the external circumference of the drawn optical fiber F1, through slots S, the optical fiber F1 is directly influenced by the turbulent movements of the cooling gas caused by the turbulence generators.

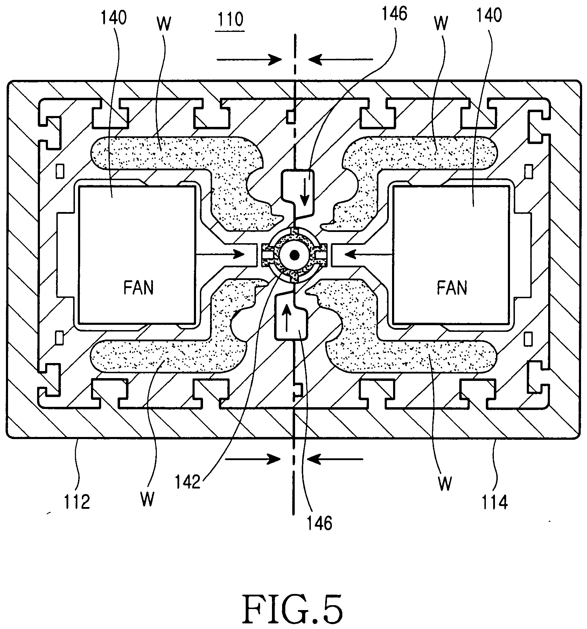

As shown in FIGs. 5 to 7, the left and right cooling body parts 112 and 114 are supplied with cooling water W of low temperature without intermission and the cooling water continuously circulates from a predetermined position. The cooling water W absorbs heat from the cooling body 110 heated by the drawn optical fiber F1 and thus primarily cools the atmosphere surrounding the optical fiber F1.

In addition, the left and right cooling body parts 112 and 114 are provided with helium gas 146, which is supplied to cool the atmosphere surrounding the optical fiber F1. Both of the cooling water W and helium gas 146 are symmetrically stored and supplied in the left and right cooling body parts 112 and 114. The cooling water W is provided to circulate continuously in the longitudinal direction of the cooling body and the helium gas 146, and the cooling gas is provided in the circumferential direction of the drawn optical fiber F1 and directed toward the surface of the optical fiber.

The turbulence generators 140 are preferably comprised of cooling fans, and the slots S are provided so that the ventilation produced by the cooling fans 140 produces turbulence and communicated with the drawn optical fiber F1. The ventilation caused by the cooling fans 140 has direct influences on the optical fiber F1 and in turn maximizes the cooling efficiency. Although the drawn optical fiber runs at a high speed, the cooling efficiency of the helium gas can be maximized because the ventilated flow provided in the circumferential direction of the optical fiber F1 by the cooling fans 140 is mixed with the helium gas 146 and makes direct contact with the optical fiber F1.

In addition, at least one vibration-damping jig 142 is mounted in the longitudinal direction of the drawn optical fiber F1, especially between the cooling fans 140 and the optical fiber F1 and thus maintains the evenness in the quality of cooling the optical fiber using the supplied cooling gas 146. The vibration-damping jig 142 consists of two members that have a predetermined curvature radius and faces each other symmetrically with reference to the drawn optical fiber F1. Consequently, the cooling gas 146 turbulenced by the cooling fans 140 interfaces the high-temperature optical fiber being drawn at a high speed, while the turbulent cooling gas makes contact and its high molecular movement serves to actively cool the surface of the optical fiber.

The operation of the cooling apparatus 10 constructed as described above will be specifically described herein.

At the time of drawing an optical fiber from the optical-fiber preform, which is positioned in the melting furnace and has undergone preheating and heating processes, if the drawing velocity of the optical fiber F1 (the linear velocity is about 200 ∼ 500 meter per minute: mpm) increases to apply tension to the optical fiber F1, the left and right cooling body parts 112 and 114 are joined together to form a single body -- i.e., the cooling body 110. At the same time, the upper and lower caps 120 and 130 are integrally engaged to the cooling body 140, and then the cooling gas 146 is supplied to the cooling body 110. Following this process, if the linear velocity of the basically tensioned and drawn optical fiber reaches to about 700 ∼ 1000 mpm, the turbulence generators 140 are operated. The turbulence generators 140 increasingly activate the molecular movements of the cooling gas 146 with their production of turbulence, and the cooling gas supplied through the slots S absorbs and transfers heat from the surface of the optical fiber F1 to the surface of the cooling body 110. Note that the slots S are provided through the internal wall of the cooling body 110 and extend vertically to the drawn optical fiber F1.

Thereafter, if the optical fiber is severed or terminated, the cooling body parts will be automatically moved apart from each other, thus opening the cooling body and the drawing process will be terminated without needing a separate flush step. Preferably, the quality of cooling the optical fiber by the cooling gas is maintained uniformly by the vibration-damping jigs 142 provided in the cooling body 110 along the longitudinal direction of the drawn optical fiber F1.

A drawing tower may be provided with at least one cooling apparatus according to the present invention, and it is preferable to employ two cooling apparatuses 10, as shown in FIG. 2.

As appreciated from the above, the cooling apparatus according to the present invention allows high-speed drawing using a turbulence generator to enhance the productivity of an optical fiber. Furthermore, the present invention can reduce the amount of cooling gas consumed by using turbulence generators, thereby increasing the competitiveness of costs.

While the invention has been shown and described with reference to certain preferred embodiments thereof, it will be understood by those skilled in the art that various changes in form and details may be made therein without departing from the scope of the invention as defined by the appended claims.

## Claims

1. A cooling apparatus for a drawing process of an optical fiber, comprising:
(A) a cooling body (110) having a left cooling body part (112) and a right cooling body part (114) that are separable from each other, extending along a longitudinal direction of a drawn optical fiber; and
(B) at least one turbulence generator mounted within one of the left cooling body part (112) and the right cooling body part (114) next to the drawn optical fiber (F1) for activating a molecular flow of the cooling gas (146) supplied into the cooling body (110), wherein the turbulence generator comprises at least one cooling fan (140) mounted within the turbulence generator for producing turbulence,
the cooling body (110) is closed by a sealing cap (120, 130) through which cooling gas (146) can be supplied into the cooling body (110),
**characterized in that**
the turbulence generator is provided with at least one slot (S) provided through an internal wall of the cooling body 110 and extending vertically to the drawn optical fiber (F1) for enabling the cooling fan (140) to communicate with the inside of the cooling body (110) through which the drawn optical fiber (F1) passes, such that a flow of the cooling gas (146) supplied through the at least one slot (S) out of the turbulence generator is directed towards the surface of the optical fiber (F1).

2. The cooling apparatus in accordance with claim 1, wherein the cooling apparatus (10) further comprises two or more turbulence generators.

3. The cooling apparatus in accordance with claim 1, wherein the turbulence generators are mounted along the longitudinal direction of the cooling body (110) in a stacked structure.

4. The cooling apparatus in accordance with claim 1, wherein the cooling apparatus body (110) further comprises at least one vibration-damping jig (142) located between the turbulence generator (142) and the drawn optical fiber (F1) to uniformly maintain the quality of cooling the optical fiber (F1).

5. The cooling apparatus in accordance with claim 4, wherein at least one vibration-damping jig (142) is positioned along the drawn optical fiber (F1).

6. The cooling apparatus in accordance with claim 4, wherein the cooling apparatus body (110) comprises two or more vibration-damping jigs (142).

7. The cooling apparatus in accordance with claim 4, wherein the vibration-damping jigs (142) are symmetrically mounted in the cooling body (110).

8. The cooling apparatus in accordance with claim 1, wherein the turbulence generator is comprised of cooling fans (140).

9. The cooling apparatus in accordance with claim 2, wherein the turbulence generators are mounted in a symmetrical fashion.

10. The cooling apparatus in accordance with claim 1, wherein the left and right cooling body parts (112, 114) are further supplied with cooling water (W) continuously circulating from a predetermined position to absorb heat from the left and right cooling body (112, 114) heated by the drawn optical fiber (F1) and thus primarily cools the atmosphere surrounding the optical fiber (F1).

11. The cooling apparatus in accordance with claim 1, wherein the left and right cooling body parts (112, 114) are provided with helium gas which is supplied to cool the atmosphere surrounding the optical fiber (F1).

## Patentansprüche

1. Kühlvorrichtung für einen Ziehprozess einer optischen Faser, umfassend:
(A) einen Kühlkörper (110) mit einem linken Kühlkörperteil (112) und einem rechten Kühlkörperteil (114), die voneinander trennbar sind, die sich entlang einer Längsrichtung einer gezogenen optischen Faser erstrecken, und
(B) zumindest einen Turbulenzgenerator, der innerhalb eines des linken Kühlkörperteils (112) und des rechten Kühlkörperteils (114) montiert ist, neben der gezogenen optischen Faser (F1), zum Aktivieren eines Molekularflusses des Kühlgases (146), das in den Kühlkörper (110) geleitet wird, wobei der Turbulenzgenerator zumindest einen Kühllüfter (140) umfasst, der innerhalb des Turbulenzgenerators zum Erzeugen von Turbulenzen montiert ist,
der Kühlkörper (110) durch eine Dichtkappe (120, 130) verschlossen ist, durch die Kühlgas (146) in den Kühlkörper (110) geleitet werden kann,
**dadurch gekennzeichnet, dass**
der Turbulenzgenerator mit zumindest einem Schlitz (S) bereitgestellt ist, der durch eine Innenwand des Kühlkörpers (110) bereitgestellt ist und sich vertikal zu der gezogenen optischen Faser (F1) erstreckt, um dem Kühllüfter (140) zu ermöglichen, mit dem Inneren des Kühlkörpers (110) zu kommunizieren, durch den die gezogene optische Faser (F1) durchgeht, sodass ein Fluss des Kühlgases (146), das durch den zumindest einen Schlitz (S) aus dem Turbulenzgenerator zugeleitet wird, in Richtung der Oberfläche der optischen Faser (F1) gerichtet ist.

2. Kühlvorrichtung nach Anspruch 1, wobei die Kühlvorrichtung (10) des Weiteren zwei oder mehr Turbulenzgeneratoren umfasst.

3. Kühlvorrichtung nach Anspruch 1, wobei die Turbulenzgeneratoren entlang der Längsrichtung des Kühlkörpers (110) in einem gestapelten Aufbau montiert sind.

4. Kühlvorrichtung nach Anspruch 1, wobei der Kühlvorrichtungskörper (110) des Weiteren zumindest ein schwingungsdämpfendes Montagegestell (142) umfasst, das zwischen dem Turbulenzgenerator (142) und der gezogenen optischen Faser (F1) liegt, um die Kühlqualität der optischen Faser (F1) einheitlich beizubehalten.

5. Kühlvorrichtung nach Anspruch 4, wobei zumindest ein schwingungsdämpfendes Montagegestell (142) entlang der gezogenen optischen Faser (F1) positioniert ist.

6. Kühlvorrichtung nach Anspruch 4, wobei der Kühlvorrichtungskörper (110) zwei oder mehr schwingungsdämpfende Montagegestelle (142) umfasst.

7. Kühlvorrichtung nach Anspruch 4, wobei die schwingungsdämpfenden Montagegestelle (142) symmetrisch im Kühlkörper (110) montiert sind.

8. Kühlvorrichtung nach Anspruch 1, wobei der Turbulenzgenerator aus Kühllüftern (140) besteht.

9. Kühlvorrichtung nach Anspruch 2, wobei die Turbulenzgeneratoren in einer symmetrischen Weise montiert sind.

10. Kühlvorrichtung nach Anspruch 1, wobei die linken und rechten Kühlkörperteile (112, 114) des Weiteren mit Kühlwasser (W) versorgt sind, das fortlaufend von einer vorbestimmten Position zirkuliert, um Hitze vom linken und rechten Kühlkörper (112, 114) zu absorbieren, die durch die gezogene optische Faser (F1) aufgeheizt sind, und dadurch vorrangig die Atmosphäre zu kühlen, die die optische Faser (F1) umgibt.

11. Kühlvorrichtung nach Anspruch 1, wobei die linken und rechten Kühlkörperteile (112, 114) mit Heliumgas bereitgestellt sind, das zugeleitet wird, um die Atmosphäre zu kühlen, die die optische Faser (F1) umgibt.

## Revendications

1. Appareil de refroidissement pour un processus d'étirage d'une fibre optique, comprenant :
(A) un corps de refroidissement (110) comportant une partie de corps de refroidissement gauche (112) et une partie de corps de refroidissement droite (114) qui sont séparables l'une de l'autre, s'étendant dans un sens longitudinal d'une fibre optique étirée ; et
(B) au moins un générateur de turbulences monté à l'intérieur de l'une de la partie de corps de refroidissement gauche (112) et de la partie de corps de refroidissement droite (114) à côté de la fibre optique étirée (F1) pour activer un flux moléculaire du gaz de refroidissement (146) fourni dans le corps de refroidissement (110), dans lequel le générateur de turbulences comprend au moins un ventilateur de refroidissement (140) monté à l'intérieur du générateur de turbulences pour produire des turbulences,
le corps de refroidissement (110) est fermé par un capuchon étanche (120, 130) à travers lequel un gaz de refroidissement (146) peut être fourni dans le corps de refroidissement (110),
**caractérisé en ce que**
le générateur de turbulences est pourvu d'au moins une fente (S) prévue à travers une paroi interne du corps de refroidissement (110) et s'étendant verticalement vers la fibre optique étirée (F1) pour permettre au ventilateur de refroidissement (140) de communiquer avec l'intérieur du corps de refroidissement (110), à travers laquelle la fibre optique étirée (F1) passe, de sorte qu'un flux du gaz de refroidissement (146) fourni à travers l'au moins une fente (S) hors du générateur de turbulences soit dirigé vers la surface de la fibre optique (F1).

2. Appareil de refroidissement selon la revendication 1, dans lequel l'appareil de refroidissement (10) comprend en outre deux générateurs de turbulences ou plus.

3. Appareil de refroidissement selon la revendication 1, dans lequel les générateurs de turbulences sont montés dans le sens longitudinal du corps de refroidissement (110) dans une structure empilée.

4. Appareil de refroidissement selon la revendication 1, dans lequel le corps d'appareil de refroidissement (110) comprend en outre au moins un gabarit d'amortissement de vibrations (142) situé entre le générateur de turbulences (142) et la fibre optique étirée (F1) pour maintenir uniformément la qualité de refroidissement de la fibre optique (F1).

5. Appareil de refroidissement selon la revendication 4, dans lequel au moins un gabarit d'amortissement de vibrations (142) est positionné le long de la fibre optique étirée (F1).

6. Appareil de refroidissement selon la revendication 4, dans lequel le corps d'appareil de refroidissement (110) comprend deux gabarits d'amortissement de vibrations ou plus (142).

7. Appareil de refroidissement selon la revendication 4, dans lequel les gabarits d'amortissement de vibrations (142) sont montés symétriquement dans le corps de refroidissement (110).

8. Appareil de refroidissement selon la revendication 1, dans lequel le générateur de turbulences se compose de ventilateurs de refroidissement (140).

9. Appareil de refroidissement selon la revendication 2, dans lequel les générateurs de turbulences sont montés de manière symétrique.

10. Appareil de refroidissement selon la revendication 1, dans lequel les parties de corps de refroidissement gauche et droite (112, 114) sont en outre alimentées en eau de refroidissement (W) circulant continuellement depuis une position prédéterminée pour absorber la chaleur des parties de corps de refroidissement gauche et droite (112, 114) chauffées par la fibre optique étirée (F1) et qui refroidit ainsi principalement l'atmosphère entourant la fibre optique (F1).

11. Appareil de refroidissement selon la revendication 1, dans lequel les parties de corps de refroidissement gauche et droite (112, 114) sont alimentées en hélium gazeux qui est fourni pour refroidir l'atmosphère entourant la fibre optique (F1).
